(19) Europäisches Patentamt
European Patent Office
Office européen des brevets

(11) EP 2 130 848 A1

(12) **EUROPEAN PATENT APPLICATION**
published in accordance with Art. 153(4) EPC

(43) Date of publication:
**09.12.2009 Bulletin 2009/50**

(21) Application number: **08722280.8**

(22) Date of filing: **17.03.2008**

(51) Int Cl.:
***C08G 63/183*** *(2006.01)* ***B32B 15/09*** *(2006.01)*
***B65D 8/16*** *(2006.01)* ***B65D 65/40*** *(2006.01)*
***C08L 67/02*** *(2006.01)*

(86) International application number:
**PCT/JP2008/054885**

(87) International publication number:
**WO 2008/117694 (02.10.2008 Gazette 2008/40)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.03.2007 JP 2007082392**

(71) Applicant: **Toyo Seikan Kaisha, Ltd.**
**Tokyo 100-8522 (JP)**

(72) Inventors:
- **FUNAGI, Yuji**
  **Yokohama-shi**
  **Kanagawa 240-0062 (JP)**
- **OHASHI, Kazuaki**
  **Yokohama-shi**
  **Kanagawa 240-0062 (JP)**
- **SATO, Kazuhiro**
  **Yokohama-shi**
  **Kanagawa 240-0062 (JP)**

(74) Representative: **Manley, Nicholas Michael**
**W.P. Thompson & Co.**
**Coopers Building**
**Church Street**
**Liverpool L1 3AB (GB)**

# (54) POLYESTER RESIN FOR METAL COATING AND METHOD FOR PRODUCING THE SAME

(57) A polyester resin for covering metal sheets, comprising an acid component chiefly consisting of a terephthalic acid and, further, containing 1 to 15 mol% of an isophthalic acid and 2 to 10 mol% of a dimeric acid; and an alcohol component chiefly consisting of an ethylene glycol; wherein the dimeric acid contains not less than 20 mol% of an aliphatic dimeric acid, and the molar ratio of the aliphatic dimeric acid and an alicyclic dimeric acid is in a range of 1:1 to 1:5. The polyester resin for covering metal sheets features excellent film-forming property, closely adhering property during the working and elution resistance.

EP 2 130 848 A1

Printed by Jouve, 75001 PARIS (FR)

## Description

Technical Field:

The present invention relates to a polyester resin for covering metal sheets and a method of producing the same. More specifically, the invention relates to a polyester resin for covering metal sheets, featuring excellent shock resistance, close adhesion during the working and elution resistance, and adapted to producing resin-coated metal sheets, metal cans and lids, and to a method of producing the same.

Background Art

So far, it is an accepted practice to coat the metal surfaces with a resin layer in order to impart corrosion resistance to metal materials. As the coating methods employed in the above technology, there have been known a method of coating the metal surfaces with a solvent in which is dissolved a thermosetting resin such as an epoxy resin or a phenol resin, and a method of sticking a preformed film such as a film of polyester, olefin or polyamide onto a metallic base body via a primer such as of isocyanate, epoxy or phenol. According to these methods, however, some thermoplastic resin or primer may contain bisphenol A which might elute out. Besides, the coating work must be carried out by using a solvent. Because of these reasons and the cost of production, therefore, it has been desired to provide a substitute compound and means.

It has further been widely known to utilize the heat-melt adhering property of a thermoplastic resin for sticking the metallic base body and the thermoplastic resin together as represented by a method of sticking a preformed film such as of a thermoplastic polyester resin onto a metal sheet by heat-adhesion and a method of sticking a thin molten film of the thermoplastic polyester resin that is extruded onto the metal sheet.

The latter method of sticking onto the metal sheet by the extrusion lamination method offers such advantages as executing the processing at a very high speed while decreasing the amount of work for forming the film and decreasing the cost. When a generally employed polyester is used, however, the film swings and pulsates making it difficult to form a coating of a uniform thickness on the metal sheet maintaining stability and close adhesion.

Further, the resin-coated metal sheet used for producing cans requires close adhesion of the film during the working so as to withstand severe workings such as drawing the resin-coated metal sheet and draw-ironing the resin-coated metal sheet, and further requires shock resistance (dent resistance) to withstand vendors. Depending upon the contents, further, the corrosion resistance and shock resistance are required to withstand high temperature and wet heated conditions such as during the retort sterilization and the conditions in the hot vendors.

A resin-coated metal sheet having the above properties has been proposed being coated with a thermoplastic resin layer which comprises an ethylene type polymer and a polyester chiefly consisting of a polyethylene terephthalate, the resin layer further containing a tocopherol or a derivative thereof in an amount of 0.05 to 3% by weight (patent document 1).

The above resin-coated metal sheet features good flavor-retaining property yet maintaining excellent shock resistance and closely adhering property, and is imparted with excellent shock resistance by being blended with an ionomer resin arousing, however, a new technological problem in that when the polyester resin is blended with the ionomer resin, lumps develop due to the aggregation of the ionomer resin depending upon the conditions making it difficult to improve the yield of products.

From the above standpoint, the present inventors have proposed a polyester resin for covering metal sheets having excellent shock resistance even without containing the ionomer resin, i.e., a polyester resin for covering metal sheets which contains a dimeric acid in an amount of 2 to 10 mol% as a dicarboxylic acid component in the polyester resin and having a weight average molecular weight (Mw) in a range of 70,000 to 160,000 (patent document 2).

Patent document 1: JP-A-2001-328208
Patent document 2: International Publication WO 2006-088212

Disclosure of the Invention:

Problems to be Solved by the Invention:

The above polyester resin containing the dimeric acid features excellent film-forming property, shock resistance and close adhesion during the working. However, the metal cans and lids formed by using the resin-coated metal sheet coated with the above polyester resin are not still satisfactory from the standpoint of flavor-retaining property.

That is, it was discovered that when the above metal cans and lids are subjected to the high temperature and wet heated conditions such as during the retort sterilization, the flavor-retaining property is deteriorated by the elution of aldehyde

components.

It is, therefore, an object of the present invention to provide a polyester resin for covering metal sheets featuring excellent film-forming property and close adhesion during the working as well as excellent elution resistance (flavor-retaining property).

Another object of the invention is to provide a resin-coated metal sheet featuring excellent properties such as corrosion resistance, shock resistance (dent resistance), close adhesion during the working and flavor-retaining property after the retort sterilization, a metal can and a can lid made from the resin-coated metal sheet.

Means for Solving the Problems:

According to the present invention, there is provided a polyester resin for covering metal sheets, comprising:

an acid component chiefly consisting of a terephthalic acid and, further, containing 1 to 15 mol% of an isophthalic acid and 2 to 10 mol% of a dimeric acid; and
an alcohol component chiefly consisting of an ethylene glycol;
wherein the dimeric acid contains not less than 20 mol% of an aliphatic dimeric acid, and the molar ratio of the aliphatic dimeric acid and an alicyclic dimeric acid is in a range of 1:1 to 1:5.

In the polyester resin for covering metal sheets of the present invention, it is desired that:

1. The dimeric acid is a completely hydrogenated product;
2. The glass transition temperature is in a range of 30 to 70˚C, and the rate of crystallization at 185˚C is not higher than 0.014 $sec^{-1}$; and
3. The weight average molecular weight (Mw) is in a range of 70,000 to 160,000.

According to the present invention, there is further provided a method of producing a polyester resin for covering metal sheets, comprising an ethylene/terephthalate copolymer containing 1 to 15 mol% of an isophthalic acid and 2 to 10 mol% of a dimeric acid, through the steps of:

(I) copolymerizing an acid component chiefly consisting of a terephthalic acid and, further, containing an isophthalic acid and a dimeric acid with an alcohol component chiefly consisting of an ethylene glycol;
(II) copolymerizing an acid component chiefly consisting of a terephthalic acid and, further, containing an isophthalic acid with an alcohol component chiefly consisting of an ethylene glycol; and

blending the copolymers obtained through the above steps (I) and (II).

In the method of producing a polyester resin for covering metal sheets of the invention, it is desired that the dimeric acid contains not less than 20 mol% of the aliphatic dimeric acid, and the molar ratio of the aliphatic dimeric acid and the alicyclic dimeric acid is in a range of 1:1 to 1:5.

According to the present invention, there is further provided a polyester film for covering metal sheets, comprising the polyester resin.

According to the present invention, there is further provided a resin-coated metal sheet having a coating of the polyester resin. In the resin-coated metal sheet, it is desired that the coating of the polyester resin is formed as the lower layer, and the upper layer comprises the polyethylene terephthalate containing the isophthalic acid as a copolymerizable component.

According to the present invention, there is further provided a metal can or a lid made from the above resin-coated metal sheet.

Effect of the Invention:

The present invention uses, as a copolymerizable component, a particular dimeric acid which contains not less than 20 mol% of an aliphatic dimeric acid and in which the molar ratio of the aliphatic dimeric acid and an alicyclic dimeric acid is in a range of 1:1 to 1:5, making it possible to provide a polyester resin for covering metal sheets from which can be produced cans and can lids that feature not only shock resistance but also excellent corrosion resistance and elution resistance (flavor-retaining property).

Further, the method of producing a polyester resin of the present invention comprises the steps of:

(I) copolymerizing an acid component chiefly consisting of a terephthalic acid and, further, containing an isophthalic acid and a dimeric acid with an alcohol component chiefly consisting of an ethylene glycol;

(II) copolymerizing an acid component chiefly consisting of a terephthalic acid and, further, containing an isophthalic acid with an alcohol component chiefly consisting of an ethylene glycol; and

blending the copolymers obtained through the above steps (I) and (II);
making it possible to obtain excellent shock resistance, close adhesion during the working and elution resistance as compared to those of a polyester resin of the same composition prepared by any other method.

Best Mode for Carrying Out the Invention:

The polyester resin for covering metal sheets of the invention comprises an acid component chiefly consisting of a terephthalic acid and, further, containing 1 to 15 mol% of an isophthalic acid and 2 to 10 mol% of a dimeric acid; and an alcohol component chiefly consisting of an ethylene glycol; wherein an important feature resides in that the dimeric acid contains not less than 20 mol% of an aliphatic dimeric acid, and the molar ratio of the aliphatic dimeric acid and an alicyclic dimeric acid is in a range of 1:1 to 1:5.
The dimeric acid which is an essential component in the polyester resin of the invention has a long alkylene chain rich in flexibility in the molecular chain. By using the dimeric acid as a copolymerizable component, therefore, the glass transition temperature of the polyester resin is lowered to impart flexibility and to improve shock resistance. As a result, the film- or resin-coated metal sheet can be produced maintaining good productivity without accompanied by the problem of decreased yield due to aggregation of the ionomer resin inherent in the prior art.

In the present invention, it is particularly important that the dimeric acid contains not less than 20 mol% of an aliphatic dimeric acid and in which the molar ratio of the aliphatic dimeric acid and an alicyclic dimeric acid is in a range of 1:1 to 1:5. The present inventors have discovered the fact that by using the above dimeric acid as a copolymerizable component, not only the shock resistance as described above but also excellent elusion resistance after the retort sterilization are obtained.

In the polyester resin of the present invention, the amount of the aliphatic dimeric acid in the dimeric acid and the ratio of the amount of the alicyclic dimeric acid and the amount of the aromatic dimeric acid, have critical meanings as will become obvious from the results of Examples appearing later.
That is, the polyester resin satisfying all of the requirements of the present invention exhibits excellent properties concerning all of film-forming property, shock resistance (dent resistance), close adhesion during the working, corrosion resistance and flavor-retaining property (elution resistance) after the retort sterilization (Examples 1 to 7). If the amount of the dimeric acid is smaller than the above range, however, the polyester resin exhibits inferior shock resistance despite other requirements are all satisfied (Comparative Example 2). If the amount of the dimeric acid is larger than the above range, on the other hand, seizure takes place at the time of granulating the resin, and no resin is obtained that is adapted to covering the metal sheet (Comparative Example 3).
If the dimeric acid is used containing the aliphatic dimeric acid in an amount smaller than 20 mol% and in which the amount of the alicyclic dimeric acid is more than 5 times as large as the amount of the aliphatic dimeric acid, aldehydes are eluted in the elution testing after the retorting, and the flavor-retaining property becomes inferior (Comparative Examples 4 to 6).

(Polyester Resin)

It is important that the polyester resin of the present invention comprises an acid component chiefly consisting of a terephthalic acid and, further, containing 1 to 15 mol% of an isophthalic acid and 2 to 10 mol% of a dimeric acid; and an alcohol component chiefly consisting an ethylene glycol; wherein the dimeric acid contains an aliphatic dimeric acid in an amount not less than 20 mol% and, particularly, in an amount of 20 to 55 mol%, and the molar ratio of the aliphatic dimeric acid and an alicyclic dimeric acid is in a range of 1:1 to 1:5 and, particularly, in a range of 1.2 to 1.4.
Generally, the dimeric acid is a dicarboxylic acid comprising a dimer of an unsaturated fatty acid. The unsaturated fatty acid is desirably the one having not less than 10 carbon atoms and is, particularly, an oleic acid having 18 carbon atoms, linoleic acid or linolenic acid. The dimeric acid is prepared by dimerizing these acids.
That is, the dimeric acid which is usually available is refined from a starting material stemming from plants, such as rape oil, soybean oil or tall oil, and is obtained by removing by-products such as monomers and trimers from the low polymers of unsaturated fatty acid, and includes, for example, an aliphatic dimeric acid represented by the following formula (1), an alicyclic dimeric acid represented by the following formula (2) and an aromatic dimeric acid represented by the following formula (3). The dimeric acid used in the present invention contains the aliphatic dimeric acid, alicyclic dimeric acid and aromatic dimeric acid in amounts so as to satisfy the above-mentioned composition.
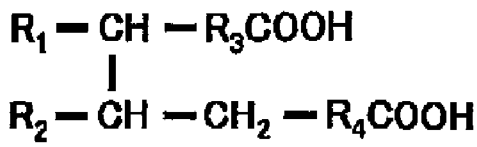

... (1)

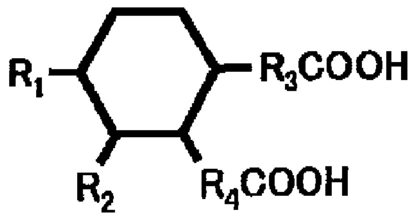

... (2)

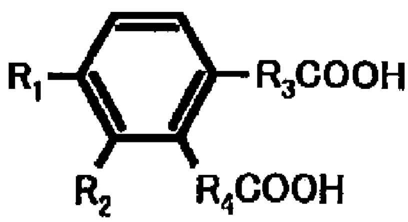

... (3)

In the above formulas (1) to (3) in the invention, $R_1$ and $R_2$ are alkyl groups, $R_3$ and $R_4$ are alkylene groups, and the total number of carbon atoms of $R_1$ to $R_4$ is in a range of 28 to 31.

If the dimeric acid used in the invention contains the aliphatic dimeric acid in an amount less than 20 mol% or contains the alicyclic dimeric acid in an amount in excess of the above ratio of amounts, then shock resistance, close adhesion during the working and elution resistance are spoiled. If the content of the aliphatic dimeric acid becomes larger than the alicyclic dimeric acid, on the other hand, resistance against the hydrolysis decreases. On the other hand, if the amount of the alicyclic dimeric acid exceeds the above ratio of amount, shock resistance, close adhesion during the working and elution resistance are spoiled.

Further, the dimeric acid, usually, has an unsaturated bond. However, the dimeric acid that is reduced by hydrogenation can also be used and, particularly, the completely hydrogenated dimeric acid is desired from the standpoint of shock resistance.

In the polyester resin of the invention, the dicarboxylic acid component chiefly consists of the terephthalic acid, i.e., contains the terephthalic acid in an amount of not less than 50 mol%. From the standpoint of mechanical properties and thermal properties, it is desired that not less than 75 mol% and, particularly, not less than 80 mol% of the dicarboxylic acid component is the terephthalic acid.

It is further desired that the polyester resin of the present invention contains 1 to 15 mol% of isophthalic acid as the dicarboxylic acid component. Therefore, the rate of crystallization at 185˚C becomes not higher than 0.024 $sec^{-1}$, and the resin coating can be more closely adhered to the metal sheet.

As the dicarboxylic acid components other than the terephthalic acid, dimeric acid and isophthalic acid, there can be used known dicarboxylic acids used for preparing polyester resins, such as naphthalenedicarboxylic acid, p-β-oxyethoxybenzoic acid, biphenyl-4,4'-dicaxboxylic acid, diphenoxyethane-4,4'-dicarboxylic acid, 5-sodiumsulfoisophthalic acid, hexahydroterephthalic acid, adipic acid, sebacic acid, trimellitic acid, pyromellitic acid, hemimellitic acid, 1,1,2,2-ethanetetracarboxylic acid, 1,1,2-ethanetricarboxylic acid, 1,3,5-pentanetricarboxylic acid, 1,2,3,4-cyclopentanetetracaroxylic acid, and biphenyl-3,4,3',4'-tetracarboxylic acid.

As for the diol component that can be used for the polyester resin of the present invention, it is desired that not less than 50% and, particularly, not less than 80% of the diol component is an ethylene glycol from the standpoint

of mechanical properties and thermal properties of the coating. As the diol component other than the ethylene glycol, there can be exemplified ethylene oxide adducts such as 1,4-butane diol, propylene glycol, neopentyl glycol, 1,6-hexylene glycol, diethylene glycol, triethylene glycol, cyclohexane dimethanol, and bisphenol A, as well as glycerol, trimethylolpropane, pentaerythritol, glycerol, trimethylolpropane, 1,2,6-hexanetriol, sorbitol and 1,1,4,4-tetrakis(hydroxymethyl) cyclohexane.

It is particularly desired that the polyester resin of the present invention contains the vitamin E (tocopherol) in an amount of 0.1 to 2% by weight. The vitamin E prevents a decrease in the molecular weight caused by the thermal hysteresis in a process for forming the polyester resin.

In addition to the vitamin E, known blending agents for use in the resin can be added, e.g., anti-blocking agent such as amorphous silica, pigment such as titanium dioxide (titanium white), antioxidant, stabilizer, various antistatic agents and lubricant according to known recipe.

As described above, the polyester resin of the present invention contains the dimeric acid as a dicarboxylic acid component in an amount of 2 to 10 mol%. Therefore, the polyester resin of the present invention has a glass transition temperature (Tg) in a range of 30 to 70˚C which is lower than that of a general polyethylene terephthalate (Tg = 78˚C), and exhibits particularly excellent shock resistance.

It is desired that the polyester resin of the present invention has an intrinsic viscosity [η] in a range of 0.8 to 1.2 as measured by a method described in Examples appearing later.

It is further desired that the polyester resin of the present invention has a weight average molecular weight (Mw) in a range of 70,000 to 160,000 and, particularly, 70,000 to 130,000. This makes it possible to obtain more excellent film-forming properties. That is, the polyester resin (polyethylene terephthalate), in general, has a low melt viscosity. When cast-formed into a film at high speeds or when extrusion-laminated onto a metallic base body, therefore, the polyester resin, usually, develops such phenomena as film swinging in which the molten resin film coming out from the T-die swings at the end in the direction of width thereof and pulsation in which the thickness of the molten resin film coming out from the T-die becomes irregular in the lengthwise direction. The polyester resin having the weight average molecular weight (Mw) lying in the above range, on the other hand, maintains a melt viscosity of not less than 6000 poises at 260˚C and at a shear rate of 243 $sec^{-1}$ which are the conditions generally employed in melt-knead-extruding the polyester resin. Therefore, excellent film-forming properties are obtained without accompanied by the above-mentioned problems.

(Preparation of the Polyester Resin)

The polyester resin used in the invention comprises an acid component chiefly consisting of a terephthalic acid and, further, containing 1 to 15 mol% of an isophthalic acid and 2 to 10 mol% of a dimeric acid, and an alcohol component chiefly consisting an ethylene glycol. The polyester resin can be prepared by a known method but using a particular dimeric acid.

For example, a polyester resin containing a terephthalic acid and a dimeric acid (hereinafter often referred to as PET/DA) and a polyester resin containing a terephthalic acid and an isophthalic acid (hereinafter often referred to as PET/IA) are separately prepared, and are blended together. Or, an isophthalic acid, a dimeric acid and a terephthalic acid are all contained as copolymerizable components and are copolymerized. According to the present invention, however, the polyester resin is particularly preferably prepared by blending together:

a polyester containing a isophthalic acid and a dimeric acid (hereinafter often referred to as PET/IA/DA) obtained through the step (I) of copolymerizing an acid component chiefly consisting of a terephthalic acid and, further, containing an isophthalic acid and a dimeric acid with an alcohol component chiefly consisting of an ethylene glycol; and

a polyester containing an isophthalic acid (hereinafter often referred to as PET/IA) obtained through the step(II) of copolymerizing an acid component chiefly consisting of a terephthalic acid and, further, containing an isophthalic acid with an alcohol component chiefly consisting of an ethylene glycol.

Namely, the polyester resin obtained by preparing PET/IA/DA and PET/IA through the above steps (I) and (II), and blending them together, exhibits superior effects concerning the shock resistance, close adhesion during the working and elution resistance as contemplated by the invention to those of the polyester resin obtained by separately preparing PET/DA and PET/IA and blending them together as described above or to those of the polyester resin that contains the isophthalic acid, dimeric acid and terephthalic acid as copolymerizable components.

That is, as will be obvious from the results of Examples appearing later, the polyester resin obtained by separately preparing PET/IA/DA and PET/IA, and blending them together, exhibits satisfactory results concerning all of shock resistance, close adhesion during the work and elution resistance (Examples 1 to 7). When the polyester resin is obtained by blending PET/DA and PET/IA together or when the polyester resin is obtained by copolymerizing all of dimeric acid, isophthalic acid and terepthalic acid together, however, it is obvious that the shock resistance becomes

inferior though the composition is the same as that of Example 1 (Comparative Example 8).

In preparing the polyester resin of the present invention, the above steps (I) and (II) may be the polymerization methods that have heretofore been known. Namely, a variety of preparation methods may be employed to prepare the polyester resin by blending the copolymerized polyester resins prepared through each of the steps so far as the polyester resin comprises an acid component chiefly consisting of a terephthalic acid and, further, containing 1 to 15 mol% of an isophthalic acid and 2 to 10 mol% of a dimeric acid; and an alcohol component chiefly consisting an ethylene glycol.
Preferably, the dimeric acid-containing polyester resin prepared through the step (I) contains 3 to 15 mol% of isophthalic acid of the isophthalic acid component that is to be contained in the polyester resin of the present invention.
The PET/IA/DA and PET/IA obtained through the steps (I) and (II) may be either melt-blended or dry-blended.

(Film)

It is desired that the polyester film of the present invention is a cast film formed by extrusion forming, such as T-die method or inflation-forming method and is, particularly, an undrawn film obtained by quickly cooling the extruded film by the cast-forming method.
The thickness of the film may differ depending upon the use but is, usually, in a range of 1 to 500 μm and, particularly, 3 to 100 μm. For covering the resin-coated metal sheet for producing cans, it is desired that the film has a thickness of 3 to 40 μm and, particularly, 5 to 35 μm as will be described later.

(Resin-Coated Metal Sheet)

Metal sheets used for obtaining the resin-coated metal sheets of the invention may be various surface-treated steel sheets and light metal sheets such as of aluminum. As the surface-treated steel sheet, there can be used the one obtained by annealing a cold-rolled steel sheet which is, thereafter, subjected to a secondary cold-rolling followed by one or two or more kinds of surface treatments such as zinc plating, tin plating, nickel plating, electrolytic chromate treatment and treatment with chromic acid. It is also allowable to use an aluminum-coated steel sheet plated with aluminum or on which aluminum is rolled.
The light metal sheets may be the so-called pure aluminum sheet as well as an aluminum alloy sheet.
The initial thickness of the metal sheet may differ depending upon the kind of the metal, use of the container or the size of the container but is, usually, 0.10 to 0.50 mm. Among them, the thickness is desirably 0.10 to 0.30 mm in the case of the surface-treated steel sheet, and is 0.15 to 0.40 mm in the case of the light metal sheet.

The resin-coated metal sheet of the present invention can be produced by heat-adhering a polyester film comprising the above polyester resin onto a metal sheet. The coating of the polyester resin of the invention can also be formed by extruding the polyester resin directly onto the metal sheet by the extrusion-coating method to form a film thereof thereon.
In the case of the extrusion coating, an extruder is used that meets the kind of the resin layer, the polyester is extruded through a die and is extruded in a molten state onto the metal base body so as to be heat-adhered thereto. The polyester resin is heat-adhered onto the metal base body by utilizing the quantity of heat possessed by the molten resin composition layer and the quantity of heat possessed by the metal sheet. The metal sheet is heated, usually, at a temperature of 90 to 290˚C and, particularly, 100 to 280˚C.

In the resin-coated metal sheet of the present invention, the resin coating is adhered onto the metal blank without providing a primer layer between the resin coating and the metal blank. The present invention, however, is not to exclude the primer layer; i.e., the primer layer may be provided as desired.
It is desired that the resin-coated metal sheet of the present invention has a coating of the above-mentioned polyester resin formed on the surface of the metal sheet and, particularly, on the metal surface on the inside of the container, the coating formed on the surface of the metal having a thickness of, desirably, 3 to 40 μm and, particularly, 5 to 35 μm.

The resin-coated metal sheet of the present invention has so excellent elution resistance that at least one coating comprising the polyester resin of the invention may be formed on the inner surface side when the resin-coated metal sheet is formed into a container. However, the coating of the polyester resin of the present invention may be the lower layer (metal sheet side) and another polyester resin having excellent flavor-retaining property may be formed as an upper layer, as a matter of course.
In particular, it is desired to employ a two-layer constitution having an upper layer which comprises a copolymerized polyethylene terephthalate containing isophthalic acid as a copolymerizable component. It is desired that the content of the isophthalic acid is 1 to 10 mol%.
When the two layers are to be formed on the metal sheet, there is no problem if a cast film that is separately formed is used. When the two layers are to be laminated by co-extrusion, however, it is desired that the layers are so co-extruded that the ratio of melt tensions of the polyester resin of the lower layer and of the polyester resin of the upper layer is from 1.1: 1 to 5:1 from the standpoint of suppressing the pulsation and extrusion performance in extrusion-laminating

the layers at a high speed.
Further, the thickness ratio of the lower layer of the polyester resin and of the upper layer of the another polyester resin is in a range of 1:15 to 15:1 providing both extrusion-laminating performance at high speeds and flavor-retaining property maintaining good balance.

(Cans and Lids)

The can of the present invention can be formed by a known method by using the above resin-coated metal sheet in such a manner that the coating of the polyester resin of the invention is on the inner surface side of the can. It is particularly desired that the can of the invention is a seamless can without seam in the side surface as produced by such means as draw working, draw/deep draw working, draw/ironing working, or draw/bend-elongation/ironing working. It is desired that the thickness of the side wall is decreased to be 20 to 95% and, particularly, 30 to 85% of the initial thickness of the resin-coated metal sheet by bend-elongating the resin-coated metal sheet based on draw/redraw working or, further, followed by ironing working.
The lid of the invention, too, can be formed by a known method of producing lid but by so forming the above resin-coated metal sheet that the coating of the polyester resin of the invention is on the inner surface side of the lid.
The lid may have a known shape such as an easy-to-open end provided with a score and an unsealing tab for forming an opening for pouring out the content, or may be a cap comprising a top panel and a skirt portion formed by using the above resin-coated metal sheet through such means as draw working.

EXAMPLES

The invention will now be described by way of Examples.
In the invention, properties were measured by the following measuring methods.

(1) Intrinsic viscosity.

About 200 mg of the resin was dissolved in a phenol/1,1,2,2-tetrachloroethane mixed solution (weight ratio 1: 1) maintained at 110˚C, and was measured for its specific viscosity at 30˚C by using the Ubbelohde's viscometer. The intrinsic viscosity [η](dl/g) was found according to the following formula,

$$[\eta] = [(-1 + (1 + 4K'\eta sp)^{1/2})/2K'C]$$

K': Huggins' constant (= 0.33)
C: concentration (g/100 ml)
η sp: specific viscosity [= (falling time of the solution - falling time of the solvent) /falling time of the solvent]

(2) Measurement of molecular weight.

The resin was dissolved in a solvent of HFIP/chloroform = 3/40 (V/V) and was measured for its molecular weight by the GPC. Here, the moving phase was chloroform, the column temperature was 40˚C, and UV (254 nm) was used for detection. By measuring the polystyrene as a reference substance, a weight average molecular weight Mw was found.

(3) Melt viscosity.

By using a Capillograph manufactured by Toyo Seiki Seisaku-sho, LTD., the resin was measured for its melt viscosity, i.e., a melt viscosity at a resin temperature of 260˚C and a shear rate of 243 $sec^{-1}$.

(4) Glass transition temperature.

By using a differential scanning calorimeter (DSC), about 5 mg of the resin was heated from 0˚C to 300˚C at a rate of 10˚C/min, in a nitrogen atmosphere, maintained at 300˚C for one minute, quickly cooled down to 0˚C, and was measured again up to 300˚C at a rate of 10˚C/min. The temperature read in the measurement of the second time while elevating the temperature was regarded as the glass transition temperature.

(5) Rate of crystallization.

About 10 mg of the resin was measured by using the differential scanning calorimeter (DSC). To take the measurement, first, the resin was heated from room temperature to 300˚C at a rate of 30˚C/min., maintained at 300˚C for 5 minutes and, thereafter, was quickly cooled down to 185˚C and was maintained at this temperature. After maintained at the same temperature, an exothermic peak was observed due to crystallization. An inverse number of the peak top time was evaluated as the rate of crystallization ($sec^{-1}$). The measurement was taken in a nitrogen atmosphere.

(6) Flat sheet dent ERV testing.

The resin-coated metal sheet was heat-treated at 225˚C for 3 minutes, at 205˚C for 2 minutes, and was retort-treated at 125˚C for 30 minutes. Thereafter, the resin-coated metal sheet was preserved in water maintained at 37˚C for one month. The coated surface to be evaluated was, then, brought into a silicone rubber having a thickness of 3 mm and a hardness of 50˚C at 5˚C under a wet condition, a steel ball of a diameter of 5/8 inches was placed on the opposite side beyond the metal sheet, and a weight of 1 kg was permitted to fall down from 40 mm to effect the shock protrusion working.
The cracking degree of the resin coating of the shock-worked portion was evaluated in terms of an electric current by applying a voltage of 6.30 V to the worked portion.
The evaluation was on the following basis:

○: Average electric current ≦ 0.1 mA
X: Average electric current > 0.1 mA

(7) Can dent testing.

A can was filled with distilled water heated at 95˚C, retort-treated at 125˚C for 30 minutes, and was preserved in a constant-temperature vessel maintained at 37˚C for one month. Thereafter, the can was allowed to vertically fall on a surface tilted at 15˚ from a height of 50 cm in an atmosphere maintained at 5˚C to impart shock to the bottom of the can. After the shock was imparted, the distilled water was drained, and the cracking degree of the resin coating of the worked portion of the can bottom was evaluated in terms of an electric current by applying a voltage of 6.30 V to the shock-worked portion.
The evaluation was on the following basis:

○: Average electric current ≦ 3 mA
X: Average electric current > 3 mA

(8) Close adhesion after the rolling.

Resin-coated metal sheets were prepared by applying resins shown in Table 2 to the surfaces on one side of the base materials of an aluminum alloy treated with chromic acid/phosphoric acid (material 5021), and were rolled by using a rolling mill, so that the equivalent strain was 80%. Next, the resin-coated surfaces were grooved to form 10 x 10 frames per a square inch. A strongly adhesive tape for industrial use was closely adhered onto the grooved surfaces and was forcibly peeled off to evaluate the closely adhering property in terms of the ratio (%) of the film remaining on the metal sheet.
The evaluation was on the following basis:

○: Average ratio of the film remaining ≧ 50%
X: Average ratio of the film remaining < 50%

(9) Retort corrosion resistance.

A can was filled with distilled water heated at 95˚C, retort-treated at 125˚C for 30 minutes, returned to room temperature, and the distilled water was drained to observe the corroded state on the inner surface of the can when the metal can was to be evaluated and on the inner surface of the lid when the lid was to be evaluated.
The evaluation was on the following basis:

○: No corrosion was recognized at all.
X: Abnormal condition such as corrosion was recognized.

(10) Retort flavor-retaining property.

A can was filled with ultra-pure water, retort-treated at 125˚C for 30 minutes, returned to room temperature, and the amount of aliphatic aldehydes eluted into water in the can was measured by P&T-GC/MS.
The evaluation was on the following basis:

○: Total amount of aliphatic aldehydes eluted ≦ 4 ppb
X: Total amount of aliphatic aldehydes eluted > 4 ppb

(Example 1)

Two extruders and a two-layer T-die were used. A resin B and a resin M in Table 1 blended together at a ratio of B:M = 66.7%:33.3% were fed to the extruder on the lower layer side and were melted and kneaded therein, while a resin L in Table 1 was fed to the extruder on the surface layer side and was melted and kneaded therein. These resins were extruded through the T-die such that the lower layer was 24 μm and the surface layer was 4 μm. These layers were cooled through the cooling roll to form a film which was then taken up as a cast film.
Next, the cast film was heat-laminated onto one surface of a TFS steel sheet (sheet thickness: 0.18 mm, amount of metal chromium: 120 $mg/m^2$, amount of chromium oxide hydrate: 15 $mg/m^2$) and onto the other surface thereof was also simultaneously heat-laminated a cast film comprising a polyester resin blended with 20% by weight of titanium dioxide as a pigment followed immediately by cooling with water to obtain a resin-coated metal sheet. Here, the temperature of the metal sheet before being laminated was set to be higher than the melting point of the polyester resin by 15˚C. The laminating roll was maintained at a temperature of 150˚C, and the sheet was passed at a speed of 40 m/min. Further, a wax-type lubricant was applied onto the resin-coated metal sheet from which a disk of a diameter of 166 mm was punched. The disk was draw-worked so that the surface coated with the lower layer and the surface layer was on the inner surface side to thereby obtain a shallow-drawn cup. The shallow-drawn cup was subjected to the redrawing/ ironing to obtain a seamless cup.
The seamless cup was as follows:

Cup diameter: 66 mm
Cup height: 128 mm
Thickness of the side wall to the initial sheet thickness: 50%

The seamless cup was subjected to the bottom-forming according to a customary manner. The seamless cup was heat-treated at a temperature 10˚C lower than the Tm of the polyester resin for 3 minutes. The cup was, thereafter, cooled, and the opening edge thereof was trimmed. Further, the cup was subjected to the printing on the outer surface thereof, drying by firing, and necking to thereby obtain a 350-ml seamless can.

(Example 2)

A resin-coated metal sheet and a seamless can were obtained in the same manner as in Example 1 but by using, on the inner surface side, a cast film obtained by feeding a blend of a resin D and the resin M in Table 1 at a ratio of D:M = 71.0%:29.0% into the extruder on the lower layer side.

(Example 3)

A resin-coated metal sheet and a seamless can were obtained in the same manner as in Example 1 but by using, on the inner surface side, a cast film obtained by feeding a blend of the resin D and a resin L in Table 1 at a ratio of D:L = 71.0%:29.0% into the extruder on the lower layer side.

(Example 4)

A blend of a resin E and the resin M in Table 1 at a ratio of E:M = 71.0%:29.0% was fed into an extruder equipped with an extrusion-coating facility, and was extrusion-laminated onto one surface of an aluminum alloy sheet (material A5182) having a thickness of 0.235 mm to obtain a resin-coated metal sheet having a resin thickness of 20 μm. Here, the temperature of the aluminum alloy sheet before being laminated was set to be lower than the melting point of the resin by 30˚C. The laminating roll was maintained at a temperature of 90˚C, and the sheet was passed at a speed of 40 m/min.

Next, a lid of a diameter of 68.7 mm was punched from the resin-coated metal sheet in a manner that the resin-coated surface was on the inner surface side of the lid. Next, the lid was subjected, on the outer surface side thereof, to the partly opening-type score working (width: 22 mm, remaining score thickness: 110 μm, score width: 20 μm) and the rivet working, and to which a tab for opening was attached to thereby obtain an SOT lid (stay-on-tab lid).

(Example 5)

Two extruders and a two-layer T-die were used. The resin E and the resin M in Table 1 blended together at a ratio of E:M = 50.0%:50.0% were fed to the extruder on the lower layer side and were melted and kneaded therein, while the resin L in Table 1 was fed to the extruder on the surface layer side and was melted and kneaded therein. These resins were extruded through the T-die such that the lower layer was 12 μm and the surface layer was 4 μm. These layers were cooled through the cooling roll to form a film which was then taken up as a cast film.
Next, the cast film was heat-laminated onto one surface of an aluminum alloy sheet (sheet thickness: 0.28 mm, material A3104, surfaces were treated with chromic acid/phosphoric acid) and onto the other surface thereof was also simultaneously heat-laminated a cast film comprising the resin M followed immediately by cooling with water to obtain a resin-coated metal sheet. Here, the temperature of the metal sheet before being laminated was set to be higher than the melting point of the polyester resin by 15˚C. The laminating roll was maintained at a temperature of 150˚C, and the sheet was passed at a speed of 40 m/min.
Further, a wax-type lubricant was applied onto the resin-coated metal sheet from which a disk of a diameter of 152 mm was punched. The disk was draw-worked so that the surface coated with the lower layer and the surface layer was on the inner surface side to thereby obtain a shallow-drawn cup. The shallow-drawn cup was subjected to the ironing to obtain a seamless cup.
The seamless cup was as follows:

Cup diameter: 66 mm
Cup height: 127 mm
Thickness of the side wall to the initial sheet thickness: 45%

The seamless cup was subjected to the doming according to a customary manner. The seamless cup was heat-treated at a temperature 10˚C lower than the Tm of the polyester resin for 3 minutes. The cup was, thereafter, left to cool, and the opening edge thereof was trimmed. Further, the cup was subjected to the printing on the curved surface thereof, drying by firing, necking and flanging to thereby obtain a 350-ml seamless can.

(Example 6)

A resin-coated metal sheet and a seamless can were obtained in the same manner as in Example 1 but by using, on the inner surface side, a cast film obtained by feeding a blend of a resin C and the resin L in Table 1 at a ratio of C:L = 80.0%:20.0% into the extruder on the lower layer side.

(Example 7)

A resin-coated metal sheet and a seamless can were obtained in the same manner as in Example 5 but by using, on the inner surface side, a cast film obtained by feeding a blend of the resin E and the resin M in Table 1 at a ratio of E:M = 50.0%:49.5% and 0.5% of the vitamin E into the extruder on the lower layer side.

(Comparative Example 1)

A resin-coated metal sheet and a seamless can were obtained in the same manner as in Example 1 but by using, on the inner surface side, a cast film obtained by feeding the resin L of Table 1 into the extruder on the lower layer side.

(Comparative Example 2)

A resin-coated metal sheet and a seamless can were obtained in the same manner as in Example 1 but by using, on the inner surface side, a cast film obtained by feeding a resin F of Table 1 into the extruder on the lower layer side.

(Comparative Example 3)

A cast film was obtained in the same manner as in Example 1 but feeding a resin G of Table 1 into the extruder on the lower layer side.

(Comparative Example 4)

A resin-coated metal sheet and a seamless can were obtained in the same manner as in Example 1 but by using, on the inner surface side, a cast film obtained by feeding a blend of a resin I and the resin M in Table 1 at a ratio of I:M = 66.7%:33.3% into the extruder on the lower layer side.

(Comparative Example 5)

A resin-coated metal sheet and a seamless can were obtained in the same manner as in Example 1 but by using, on the inner surface side, a cast film obtained by feeding a blend of a resin J and the resin L in Table 1 at a ratio of J:L = 66.7%:33.3% into the extruder on the lower layer side.

(Comparative Example 6)

A resin-coated metal sheet and a seamless can were obtained in the same manner as in Example 1 but by using, on the inner surface side, a cast film obtained by feeding a blend of a resin K and the resin L in Table 1 at a ratio of K:L = 66.7%:33.3% into the extruder on the lower layer side.

(Comparative Example 7)

A cast film was obtained in the same manner as in Example 1 but feeding a resin H of Table 1 into the extruder on the lower layer side.

(Comparative Example 8)

A resin-coated metal sheet and a seamless can were obtained in the same manner as in Example 1 but by using, on the inner surface side, a cast film obtained by feeding a resin A of Table 1 into the extruder on the lower layer side.
Table 1

| | Amount of dimeric acid [mol%] | Amount of isophthalic acid [mol%] | Content of aliphatic dimeric acid in the dimeric acid [mol%] | Molar ratio of aliphatic dimeric acid and alicyclic dimeric acid |
|---|---|---|---|---|
| Resin A | 5.0 | 10.0 | 23 | 1:2.8 |
| Resin B | 7.5 | 7.5 | 23 | 1:2.8 |
| Resin C | 7.5 | 0.0 | 23 | 1:2.8 |
| Resin D | 7.0 | 6.0 | 23 | 1:2.8 |
| Resin E | 7.0 | 12.0 | 23 | 1:2.8 |
| Resin F | 1.0 | 5.0 | 23 | 1:2.8 |
| Resin G | 12.0 | 5.0 | 23 | 1:2.8 |
| Resin H | 5.0 | 5.0 | 23 | 1:2.8 |
| Resin I | 7.5 | 7.5 | 13 | 1:5.8 |
| Resin J | 7.5 | 0.0 | 13 | 1:5.8 |
| Resin K | 7.5 | 0.0 | 13 | 1:5.8 |
| Resin L | 0.0 | 5.0 | - | - |
| Resin M | 0.0 | 15.0 | - | - |

Table 1 (continued)

| | Dimeric acid is hydrogenated | Intrinsic viscosity [dl/g] | Molecular weight Mw | Melt viscosity [poises] | Glass transition temp. [°C] | Rate of crystallization [$sec^{-1}$] |
|---|---|---|---|---|---|---|
| Resin A | yes | 1.12 | 127000 | 10100 | 47 | 0.001 or less |
| Resin B | yes | 1.15 | 125000 | 10500 | 40 | 0.001 or less |
| Resin C | yes | 1.17 | 123000 | 10800 | 41 | 0.020 |
| Resin D | yes | 1.00 | 100000 | 8300 | 45 | 0.001 or less |
| Resin E | yes | 0.98 | 106000 | 7700 | 44 | 0.001 or less |
| Resin F | yes | 1.09 | 117000 | 11100 | 68 | 0.001 |
| Resin G | yes | 0.77 | 87000 | 1300 | 24 | 0.001 |
| Resin H | yes | 0.83 | 68000 | 4700 | 49 | 0.001 |
| Resin I | yes | 1.06 | 136000 | 8000 | 41 | 0.001 or less |
| Resin J | partly | 1.14 | 139000 | 8000 | 40 | 0.021 |
| Resin K | no | 1.19 | 149000 | 9500 | 39 | 0.018 |
| Resin L | - | 0.90 | 77000 | 9000 | 78 | 0.003 |
| Resin M | - | 0.90 | 77000 | 9800 | 74 | 0.001 or less |

Table 2

| | Lower layer component | Amount of dimeric acid [mol%] | Amount of isophthalic acid [mol%] | Film-forming property | Molecular weight Mw | Glass transition temp. [°C] | Rate of crystallization [$sec^{-1}$] |
|---|---|---|---|---|---|---|---|
| Ex. 1 | resin B: 66.7%<br>resin M: 33.3% | 5.0 | 10.0 | good | 95000 | 48 | 0.001 or less |
| Ex. 2 | resin D: 71.0%<br>resin M: 29.0% | 5.0 | 8.6 | good | 79000 | 48 | 0.001 or less |
| Ex. 3 | resin D: 71.0%<br>resin L: 29.0% | 5.0 | 5.7 | good | 76000 | 49 | 0.001 |
| Ex. 4 | resin E: 71.0%<br>resin M: 29.0% | 5.0 | 12.9 | good | 82000 | 48 | 0.001 or less |
| Ex. 5 | resin E: 50.0%<br>resin M: 50.0% | 3.5 | 13.5 | good | 78000 | 54 | 0.001 or less |
| Ex. 6 | resin C: 80%<br>resin L: 20% | 6.0 | 1.0 | good | 72000 | 46 | 0.005 |
| Ex. 7 | resin E: 50.0%<br>resin M: 49.5%<br>vitamin E: 0.5% | 3.5 | 13.5 | good | 78000 | 55 | 0.001 or less |

Table 2 (continued)

| | Base material | Forming | Dent resistance (flat sheet) | Dent resistance (can) | Closely adhering property | Corrosion resistance | Flavor-retaining property |
|---|---|---|---|---|---|---|---|
| Ex. 1 | TFS | can | ○ | ○ | ○ | ○ | ○ |
| Ex. 2 | TFS | can | ○ | ○ | ○ | ○ | ○ |
| Ex. 3 | TFS | can | ○ | ○ | ○ | ○ | ○ |
| Ex. 4 | Al | lid | ○ | ○ | ○ | ○ | ○ |
| Ex. 5 | Al | can | ○ | ○ | ○ | ○ | ○ |
| Ex. 6 | TFS | can | ○ | ○ | ○ | ○ | ○ |
| Ex. 7 | Al | can | ○ | ○ | ○ | ○ | ○ |

Table 3

| | Lower layer component | Amount of dimeric acid [mol%] | Amount of isophthalic acid [mol%] | Film-forming property | Molecular weight Mw | Glass transition temp. [°C] | Rate of crystallization [$sec^{-1}$] |
|---|---|---|---|---|---|---|---|
| Comp. Ex. 1 | resin L: 100% | 0.0 | 5.0 | good | 67000 | 73 | 0.001 |
| Comp. Ex. 2 | resin F: 100% | 1.0 | 5.0 | good | 78000 | 68 | 0.001 |
| Comp. Ex. 3 | resin G: 100% | 12.0 | 5.0 | poor | 57000 | 24 | 0.001 |
| Comp. Ex. 4 | resin I: 66.7%<br>resin M: 33.3% | 5.0 | 10.0 | good | 100000 | 48 | 0.001 or less |
| Comp. Ex. 5 | resin J: 66.7%<br>resin L: 33.3% | 5.0 | 1.7 | good | 102000 | 49 | 0.011 |
| Comp. Ex. 6 | resin K: 66.7%<br>resin L: 33.4% | 5.0 | 1.7 | good | 105000 | 49 | 0.012 |
| Comp. Ex. 7 | resin H: 100% | 5.0 | 5.0 | poor | 58000 | 49 | 0.001 |
| Comp. Ex. 8 | resin A: 100% | 5.0 | 10.0 | good | 104000 | 47 | 0.001 or less |

Table 3 (continued)

| | Base material | Forming | Dent resistance (flat sheet) | Dent resistance (can) | Closely adhering property | Corrosion resistance | Flavor-retaining property |
|---|---|---|---|---|---|---|---|
| Comp. Ex. 1 | TFS | can | × | × | ○ | × | ○ |
| Comp. Ex. 2 | TFS | can | × | × | ○ | × | ○ |
| Comp. Ex. 3 | - | - | - | - | - | - | - |
| Comp. Ex. 4 | TFS | can | ○ | ○ | ○ | ○ | × |
| Comp. Ex. 5 | TFS | can | ○ | × | × | × | × |
| Comp. Ex. 6 | TFS | can | × | × | × | × | × |
| Comp. Ex. 7 | - | - | - | - | - | - | - |
| Comp. Ex. 8 | TFS | can | × | × | ○ | ○ | ○ |

From Table 2, it is obvious that the films were favorably formed in Examples 1 to 7, the resin-coated metal

sheets coated with these films exhibited excellent dent resistance in the flat sheet dent ERV testing as well as excellent adhesion of the resin after the rolling, and the seamless cans and can lids obtained by forming the resin-coated metal sheets featured excellent dent resistance, corrosion resistance and flavor-retaining property.

It is, further, obvious from Table 3 that Comparative Examples 1 and 2 exhibited poor dent resistance and corrosion resistance, Comparative Examples 4 to 6 exhibited poor flavor-retaining property, and Comparative Example 8 exhibited poor dent resistance. In Comparative Examples 3 and 7, the films were formed very poorly and could not be evaluated.

## Claims

**1.** A polyester resin for covering metal sheets, comprising:

an acid component chiefly consisting of a terephthalic acid and, further, containing 1 to 15 mol% of an isophthalic acid and 2 to 10 mol% of a dimeric acid; and
an alcohol component chiefly consisting of an ethylene glycol;
wherein said dimeric acid contains not less than 20 mol% of an aliphatic dimeric acid, and the molar ratio of the aliphatic dimeric acid and an alicyclic dimeric acid is in a range of 1:1 to 1:5.

**2.** The polyester resin for covering metal sheets according to claim 1, wherein said dimeric acid is a completely hydrogenated product.

**3.** The polyester resin for covering metal sheets according to claim 1, wherein the glass transition temperature is in a range of 30 to 70˚C, and the rate of crystallization at 185˚C is not higher than 0.014 $sec^{-1}$.

**4.** The polyester resin for covering metal sheets according to claim 1, wherein the weight average molecular weight (Mw) is in a range of 70,000 to 160,000.

**5.** A method of producing a polyester resin for covering metal sheets, comprising the steps of:

(I) copolymerizing an acid component chiefly consisting of a terephthalic acid and, further, containing an isophthalic acid and a dimeric acid with an alcohol component chiefly consisting of an ethylene glycol;
(II) copolymerizing an acid component chiefly consisting of a terephthalic acid and, further, containing an isophthalic acid with an alcohol component chiefly consisting of an ethylene glycol; and

blending the copolymers obtained through the said steps (I) and (II).

**6.** The method of producing a polyester resin for covering metal sheets according to claim 5, wherein said dimeric acid contains not less than 20 mol% of the aliphatic dimeric acid, and the molar ratio of the aliphatic dimeric acid and the alicyclic dimeric acid is in a range of 1:1 to 1:5.

**7.** A polyester film for covering metal sheets, comprising the polyester resin of claim 1.

**8.** A resin-coated metal sheet having a coating of the polyester resin of claim 1.

**9.** The resin-coated metal sheet according to claim 7, wherein the coating of said polyester resin is formed as the lower layer, and the upper layer comprises the polyethylene terephthalate containing the isophthalic acid as a copolymerizable component.

**10.** A metal can made from the resin-coated metal sheet of claim 8.

**11.** A metal can made from a resin-coated metal sheet of claim 9.

**12.** A lid made from a resin-coated metal sheet of claim 8.

**13.** A lid made from a resin-coated metal sheet of claim 8.

## INTERNATIONAL SEARCH REPORT

International application No.
PCT/JP2008/054885

A. CLASSIFICATION OF SUBJECT MATTER
*C08G63/183*(2006.01)i, *B32B15/09*(2006.01)i, *B65D8/16*(2006.01)i, *B65D65/40*(2006.01)i, *C08L67/02*(2006.01)i

According to International Patent Classification (IPC) or to both national classification and IPC

B. FIELDS SEARCHED

Minimum documentation searched (classification system followed by classification symbols)
C08G63/00-63/91, B32B15/09, B65D8/16, B65D65/40, C08L67/00-67/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2006/088212 A1 (Toyo Seikan Kaisha, Ltd.), 24 August, 2006 (24.08.06), Claims; page 5, line 10 to page 10, line 1; examples & EP 1849813 A1 | 1-13 |
| A | JP 2001-347605 A (Toyo Seikan Kaisha, Ltd.), 18 December, 2001 (18.12.01), Claims; Par. Nos. [0013] to [0017]; examples (Family: none) | 1-13 |
| A | JP 2006-265325 A (Toray Industries, Inc.), 05 October, 2006 (05.10.06), Claims; Par. Nos. [0013] to [0025]; examples (Family: none) | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 April, 2008 (10.04.08) | Date of mailing of the international search report<br>22 April, 2008 (22.04.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2008/054885

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-329056 A (Toyobo Co., Ltd.), 27 November, 2001 (27.11.01), Claims; Par. Nos. [0013] to [0016]; examples (Family: none) | 1-13 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001328208 A
- WO 2006088212 A